# FASCICULE DE BREVET EUROPEEN

(11) **EP 2 788 532 B1**
(45) Date de publication et mention de la délivrance du brevet: **19.06.2019**
(21) Numéro de dépôt: 12797886.4
(22) Date de dépôt: 04.12.2012
(51) Int. Cl.: C25B 15/02, C25B 1/04, C25B 9/18, C25B 1/06

(54) **PROCEDE DE FONCTIONNEMENT D'UN ELECTROLYSEUR HAUTE TEMPERATURE COMPORTANT UNE ETAPE DE REDUCTION DU MATERIAU DES CATHODES**
VERFAHREN ZUM BETREIBEN EINES HOCHTEMPERATUR-ELEKTROLYSEURS MIT EINEM SCHRITT ZUR REDUZIERUNG DES MATERIALS DER KATHODEN
METHOD FOR OPERATING A HIGH-TEMPERATURE ELECTROLYZER COMPRISING A STEP OF REDUCING THE MATERIAL OF THE CATHODES

(30) Priorité: 05.12.2011 FR 1161151
(43) Date de publication de la demande: 15.10.2014
(73) Titulaire: Commissariat à l'Énergie Atomique et aux Énergies Alternatives, 75015 Paris (FR)
(72) Inventeur: MOREL, Bertrand, F-38950 SAINT MARTIN LE VINOUX (FR)
(74) Mandataire: Ahner, Philippe
(86) Numéro de dépôt international: PCT/EP2012/074384
(87) Numéro de publication internationale: WO 2013/083573

(56) Documents cités:
- WO-A1-2011/110675
- US-A1- 2006 166 070
- US-A1- 2006 222 929
- US-A1- 2008 261 098
- HAUCH A ET AL: "Highly efficient high temperature electrolysis", JOURNAL OF MATERIALS CHEMISTRY, THE ROYAL SOCIETY OF CHEMISTRY, CAMBRIDGE, GB, vol. 2008, no. 20, 31 janvier 2008 (2008-01-31), pages 2331-2340, XP008126078, ISSN: 0959-9428, DOI: 10.1039/B718822F [extrait le 2008-01-31]

## Description

### DOMAINE TECHNIQUE ET ART ANTÉRIEUR

La présente invention se rapporte à un procédé de fonctionnement d'un électrolyseur haute température comportant une étape de réduction du matériau des cathodes.

Un électrolyseur de la vapeur d'eau à haute température comporte une pluralité de cellules élémentaires formées par une cathode et une anode séparées par un électrolyte, les cellules élémentaires étant raccordées électriquement en série au moyen de plaques interconnectrices interposées, en général, entre une anode d'une cellule élémentaire et une cathode de la cellule élémentaire suivante. Une connexion anode-anode suivie par une connexion cathode-cathode est également possible. Les plaques interconnectrices sont des composants conducteurs électroniques formés par une plaque métallique. Ces plaques assurent par ailleurs la séparation entre le fluide cathodique circulant au niveau d'une cellule élémentaire du fluide anodique circulant dans une cellule élémentaire suivante.

Un électrolyseur de la vapeur d'eau à haute température fonctionne de la manière suivante : de la vapeur d'eau circule du côté de la cathode et par application d'une différence de potentiel aux bornes de des cellules élémentaires, cette vapeur d'eau est dissociée en générant de l'hydrogène à la cathode et de l'oxygène à l'anode.

L'anode et la cathode sont en matériau poreux dans lequel les gaz peuvent s'écouler et sont majoritairement conductrices électroniques.

L'électrolyte séparant ces deux électrodes est quant à lui dense, il est imperméable au gaz, et il est conducteur ionique. Son épaisseur est fonction du type de cellule. L'électrolyte peut également assurer la fonction de support mécanique de la cellule et son épaisseur est de l'ordre de la centaine de microns, dans ce cas l'électrolyseur est désigné à électrolyte support. Alternativement, c'est la cathode qui assure cette fonction, et le film d'électrolyte a typiquement une épaisseur de l'ordre de la dizaine de µm. L'électrolyte est par exemple réalisé en zircone stabilisée à l'yttrium ou zircone yttriée.

Comme indiqué ci-dessus, la cathode est une électrode poreuse à gaz. Son squelette solide est formé par un composite céramique-métal appelé cermet. Le matériau composite doit présenter une conductivité électronique élevée, par exemple supérieur à 100 S/cm et si possible une conductivité ionique, un grand nombre de points triples (lieux de la réaction) et une activité catalytique pour la réaction de réduction de la vapeur d'eau. En outre, sa stabilité sous atmosphère réductrice et en présence d'eau doit être assurée, ainsi que sa compatibilité avec les matériaux de la plaque d'interconnexion et de l'électrolyte. Il présente également un coefficient de dilatation thermique compatible avec celui de l'électrolyte. Le cermet Ni-YSZ présente ces propriétés. Il est obtenu par frittage d'un mélange de particules d'oxyde de nickel et de zircone stabilisée à l'oxyde d'yttrium.

L'anode est aussi une électrode poreuse. Elle doit présenter une conductivité électronique et ionique similaire à celle de la cathode. Un matériau classique la composant est une pérovskite, par exemple le LSM (La₁₋ₓSrₓMnO₃), qui a longtemps été le matériau de référence en raison de sa compatibilité chimique relativement bonne avec le YSZ. Du fait de sa faible conductivité ionique et d'un coefficient de dilatation un peu supérieur à celui de 8YSZ, elle est en général mélangée avec YSZ pour réaliser une électrode composite. On peut également mentionner la pérovskite La₁₋ₓSrₓCo_{1-y}Fe_{y}O_{3-δ}, notée LSCF qui est le matériau d'électrode à oxygène de référence pour les cellules à électrode support.

Le fonctionnement à haute température de ces dispositifs, généralement entre 700°C et 900°C, est imposé par la propriété de conduction de la zircone yttriée comme électrolyte. En effet, l'électrolyte YSZ est un bon conducteur ionique, mais uniquement à haute température. Une phase de réduction préalable à l'électrolyse est cependant nécessaire pour transformer l'oxyde de nickel NiO du cermet de la cathode en nickel Ni. Anne Hauch et al. (Highly efficient high temperature electrolysis, Journal of Materials Chemistry, 2008, 18, 2331-2340) ont publié un article de synthèse concernant entre autres l'instabilité du cermet Ni-YSZ utilisé comme électrode de dégagement d'hydrogène.

Cette étape de réduction réalisée préalablement au début de l'électrolyse est réalisée en faisant circuler un flux gazeux réducteur, typiquement de l'hydrogène dans la cathode pour transformer le NiO en Ni. Cette technique est satisfaisante lorsque l'alimentation du compartiment anodique et l'alimentation du compartiment cathodique sont séparées. Ces alimentations séparées permettant de faire circuler le gaz réducteur au niveau de la cathode uniquement.

Mais, dans le cas d'un électrolyseur haute température comportant une seule entrée d'alimentation connectée au compartiment anodique et au compartiment cathodique, une telle technique n'est pas envisageable. En effet, l'injection d'un gaz réducteur à la cathode provoquerait également une circulation de gaz réducteur à l'anode, or ce gaz réducteur pourrait détériorer les propriétés de conduction, ainsi que les propriétés électrochimiques de l'anode.

### EXPOSÉ DE L'INVENTION

C'est par conséquent un but de la présente invention d'offrir un procédé de fonctionnement d'un électrolyseur de l'eau à haute température dans lequel l'anode est protégée lors de l'étape de réduction.

Le but précédemment énoncé est atteint par un procédé de fonctionnement d'un électrolyseur haute température pour la production d'hydrogène, comportant une étape de mise en température à une température comprise entre 650°C et 950°C, une étape de circulation d'un gaz inerte ou de vapeur d'eau et une étape d'application d'une différence de potentiel entre la cathode et l'anode d'au moins 0,62 V, ayant pour effet de réduire l'oxyde de nickel. La différence de potentiel appliquée à chacune des cellules élémentaires dépend de la température. Il sera de l'ordre de 0,62 V pour une température de 950°C et de 0,7 V pour une température de 800°C.

Cette différence de potentiel génère un flux d'oxygène de la cathode à l'anode. Cela se traduit par un pompage de l'oxygène présent dans le cermet, une migration à travers l'électrolyte de l'oxygène sous forme anionique (O²⁻), une réduction du NiO en Ni et la génération d'oxygène gazeux au niveau de l'anode.

Ce procédé présente l'avantage de maintenir une pression partielle d'oxygène élevée à l'anode, supérieure ou égale à 10⁻⁵ atm, ce qui préserve son intégrité.

Dans un mode de réalisation, l'électrolyseur est alimenté en gaz neutre, ce qui permet de ne pas réoxyder le cermet.

Dans un autre mode de réalisation, l'électrolyseur est alimenté en vapeur d'eau dès la phase de réduction de l'oxyde de nickel. Les premiers sites où le NiO est réduit en Ni provoquent la réduction de l'eau en hydrogène, cet hydrogène participe alors à la réduction du NiO restant comme dans le procédé de l'état de la technique, tout en n'endommageant pas l'anode.

La présente invention a alors pour objet un procédé de fonctionnement d'une installation de production d'hydrogène comprenant au moins un électrolyseur haute température, ledit électrolyseur comportant une pluralité de cellules élémentaires, chacune des cellules élémentaires comportant une cathode et une anode séparées par un électrolyte, les cellules élémentaires étant séparées par une plaque d'interconnexion, chaque plaque d'interconnexion définissant avec une cathode adjacente un compartiment cathodique et avec une anode adjacente un compartiment anodique, les cathodes étant réalisées à partir d'un cermet contenant du nickel, ledit procédé comportant les étapes :
a) élévation de la température des cellules jusqu'à une température de fonctionnement de l'électrolyseur comprise entre 650°C et 950°C,
b) application d'une différence de potentiel aux bornes de chacune des cellules élémentaires égale à au moins 0,62 V, ayant pour effet de réduire l'oxyde de nickel.

De manière très avantageuse, lors de l'étape a) la température est élevée jusqu'à une température comprise entre 700°C et 900°C, et, lors de l'étape b), la différence de potentiel aux bornes de chacune des cellules élémentaires est égale à au moins 0,65 V.

Dans un premier mode de réalisation, lors d'une étape b'), les compartiments cathodiques et les compartiments anodiques sont alimentés en gaz neutre, par exemple en azote.

Dans un deuxième mode de réalisation, lors d'une étape b'), les compartiments cathodiques et les compartiments anodiques sont alimentés en vapeur d'eau.

Le procédé de fonctionnement comporte après les étapes b) et b') les étapes,
c) alimentation en vapeur d'eau des compartiments cathodiques,
d) application d'une différence de potentiel aux bornes des cellules élémentaires apte à provoquer l'électrolyse de l'eau et supérieure à celle appliquée lors de l'étape b),
e) collecte de l'hydrogène produit aux cathodes et de l'oxygène produit aux anodes.

Les étapes c) et d) débutent de préférence simultanément.

Selon un mode de réalisation, lors de l'étape c) le débit de vapeur d'eau est augmenté par rapport à celui de l'étape b).

De manière avantageuse, lors de l'étape b), un courant aux bornes des cellules élémentaires est mesuré. L'étape c) peut alors débuter lorsque le courant mesuré aux bornes des cellules élémentaires est inférieur à une valeur seuil prédéterminée.

La présente invention a également pour objet une installation de production d'hydrogène comportant au moins un électrolyseur haute température, ledit électrolyseur comportant :
- une pluralité de cellules élémentaires, chacune des cellules élémentaires comportant une cathode et une anode séparées par un électrolyte, les cellules élémentaires étant séparées par une plaque d'interconnexion, chaque plaque d'interconnexion définissant avec une cathode adjacente un compartiment cathodique et avec une anode adjacente un compartiment anodique, les cathodes étant réalisées à partir d'un cermet contenant du nickel,
- une entrée d'alimentation des compartiments anodiques et un entrée d'alimentation des compartiments cathodiques,
- une alimentation en vapeur d'eau d'au moins les compartiments cathodiques connectée à l'entrée d'alimentation des compartiments cathodiques,
- des moyens de collecte de l'hydrogène produit aux cathodes et de l'oxygène produit aux anodes,
- une source de tension,
- une unité de commande contrôlant l'installation de sorte que, lors d'une première phase de fonctionnement, la température des cellules atteigne une température de fonctionnement comprise entre 650°C et 950°C et qu'une différence de potentiel aux bornes des cellules élémentaires au moins égale à 0,62 V soit appliquées, et l'unité de commande (UC) étant configurée pour commander l'alimentation en gaz neutre des compartiments cathodiques et anodiques au moins lors de la première phase de fonctionnement, et de sorte que, lors d'une deuxième phase de fonctionnement, une différence de potentiels aux bornes des cellules élémentaires apte à provoquer l'électrolyse de l'eau et supérieure à celle appliquée lors de la première phase de fonctionnement soit appliquée et les compartiments anodiques et cathodiques soient alimentés en vapeur d'eau.

L'électrolyseur peut avantageusement comporter une alimentation unique des compartiments anodiques et des compartiments cathodiques.

Dans un mode de réalisation, l'installation peut comporter une source de gaz neutre, l'unité de commande commandant l'alimentation en gaz neutre des compartiments cathodiques au moins lors de la première phase de fonctionnement.

Dans un autre mode de réalisation, l'unité de commande commande l'alimentation en vapeur d'eau des compartiments cathodiques au moins lors de la première phase de fonctionnement.

L'installation comporte des moyens de mesure du courant aux bornes des cellules élémentaires, l'unité de commande commandant l'alimentation en eau des compartiments cathodiques en fonction de la valeur de courant mesurée et commande la tension aux bornes des cellules élémentaires de sorte qu'une deuxième phase de fonctionnement d'électrolyse de l'eau commence lorsque la valeur du courant mesuré est inférieure à une valeur seuil donnée correspondant à une quantité d'oxyde de nickel aux cathodes inférieure à une quantité prédéterminée.

Les cathodes sont par exemple en cermet Ni-zircone yttriée.

### BRÈVE DESCRIPTION DES DESSINS

La présente invention sera mieux comprise à l'aide de la description qui va suivre et des dessins en annexe sur lesquels :
- la figure 1 est une vue schématique en coupe d'un électrolyseur haute température auquel peut être appliqué le procédé de fonctionnement selon l'invention,
- la figure 2 est une représentation schématique d'une cellule élémentaire de l'électrolyseur de la figure 1 illustrant les réactions à l'anode et à la cathode lors de l'électrolyse de l'eau,
- la figure 3 est une représentation schématique d'une installation de production d'hydrogène comprenant l'électrolyseur de la figure 1,
- la figure 4 est une représentation graphique de l'évolution de la pression partielle d'oxygène en atmosphère à l'équilibre Ni/NiO en fonction de la température en °C,
- la figure 5 est une représentation graphique de l'évolution du courant en mA/cm² aux bornes de l'électrolyseur en fonction du temps en heure pendant l'étape de réduction du NiO en Ni.

### EXPOSÉ DÉTAILLÉ DE MODES DE RÉALISATION PARTICULIERS

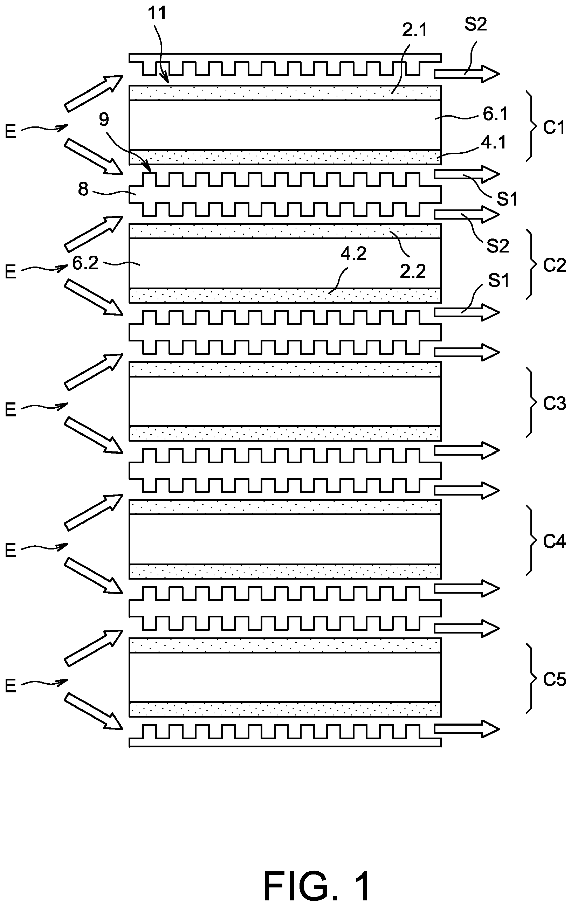

Sur la figure 1, on peut voir, représenté schématiquement, un exemple de réalisation d'un électrolyseur EHT haute température auquel peut être appliqué le procédé de fonctionnement selon la présente invention. L'électrolyseur comporte une pluralité de cellules élémentaires C1, C2... empilées.

Chaque cellule élémentaire comporte un électrolyte disposé entre une cathode et une anode.

Dans la suite de la description, nous décrirons en détail les cellules C1 et C2 et leur interface.

La cellule C1 comporte une cathode 2.1 et une anode 4.1 entre lesquelles est disposé un électrolyte 6.1.

La cellule C2 comporte une cathode 2.2 et une anode 4.2 entre lesquelles est disposé un électrolyte 6.2.

Les cathodes 2.1, 2.2 et les anodes 4.1, 4.2 sont réalisées en matériau poreux. Les cathodes sont formées par un cermet comportant du nickel, par exemple il peut s'agir du cermet nickel - zircone yttriée (NiYSZ), d'un cermet nickel-cérine dopée ou gadolinium désigné ni-CGO. Les anodes sont par exemple en La₁₋ₓSrₓCo_{1-y} Fe_{y}O_{3-δ}, notée LSCF ou en LSM.

L'anode 4.1 de la cellule C1 est reliée électriquement à la cathode 2.2 de la cellule C2 par une plaque interconnectrice 8 venant en contact avec l'anode 4.1 et la cathode 2.2. Par ailleurs elle permet l'alimentation électrique de l'anode 4.1 et de l'anode 2.2 est par exemple en YSZ.

Une plaque interconnectrice 8 est interposée entre deux cellules élémentaires. Dans l'exemple représenté, elle est interposée entre une anode d'une cellule élémentaire et la cathode de la cellule adjacente. Mais on pourrait prévoir qu'elle soit interposée entre deux anodes ou deux cathodes.

La plaque interconnectrice 8 définit avec l'anode et la cathode adjacentes des canaux pour la circulation de fluides. Ils définissent des compartiments anodiques 9 dédiés à la circulation des gaz au niveau des anodes et des compartiments cathodiques 11 dédiés à la circulation des gaz au niveau des cathodes.

Cet électrolyseur comporte des entrées d'alimentation uniques E (représentées schématiquement) à la fois pour les compartiments anodiques 9 et pour les compartiments cathodiques 11 et deux sorties d'évacuation S1, S2 (représentées schématiquement), l'une S1 pour l'hydrogène produite dans les compartiments cathodiques 11 et l'autre S2 pour l'oxygène produit dans les compartiments anodiques. L'électrolyseur est alimenté en vapeur d'eau.

La température de fonctionnement d'un tel électrolyseur est comprise entre 650°C et 950°C.

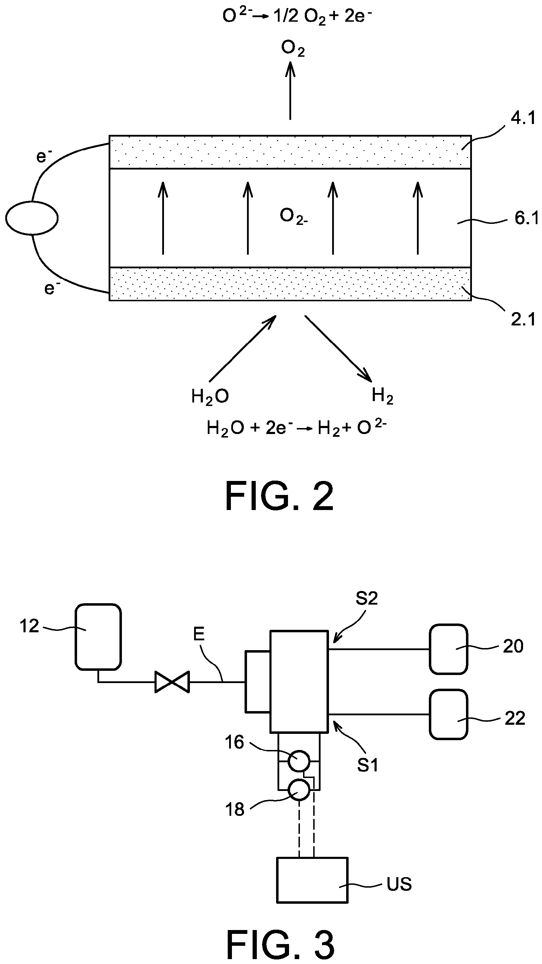

Sur la figure 2, sont représentées les réactions ayant lieu à l'anode et à la cathode lors de l'électrolyse de l'eau.

A la cathode, la réaction de réduction suivante a lieu :

H₂O + 2e⁻ → H₂ + O²⁻ (I)

Il y a alors production d'hydrogène.

Les anions O²⁻ produits à la cathode traversent l'électrolyte en direction de l'anode et la réaction d'oxydation suivante a lieu:

O²⁻ → ½O₂ + 2e⁻ (II)

Il y a alors production d'oxygène.

Sur la figure 3, on peut voir une installation de production d'hydrogène comportant l'électrolyseur EHT de la figure 1.

L'installation comporte également une source de vapeur d'eau 12, éventuellement une source de gaz neutre (non représentée), une source de tension 16 apte à appliquer une tension aux bornes des cellules élémentaires, et une unité de commande UC contrôlant le fonctionnement de l'installation, et des moyens de collecte 20, 22 de l'hydrogène et de l'oxygène respectivement. L'installation comporte des moyens de mesure du courant aux bornes des cellules élémentaires 18,

Préalablement à l'utilisation normale de l'électrolyseur pour produire de l'hydrogène, les étapes suivantes du procédé de fonctionnement ont lieu :
a) mise à la température de fonctionnement de l'électrolyseur, par exemple entre 650°C et 950°C environ, avantageusement entre 600°C et 900°C,
b) application d'une différence de potentiel ΔU d'au moins 0,62 V entre l'anode et la cathode de chaque cellule élémentaire, avantageusement au moins 0,65 V.

Los de l'étape b), la différence de potentiel ΔU a pour effet d'imposer un flux d'oxygène de la cathode à l'anode, ce qui se traduit par un pompage de l'oxygène présent dans le cermet, plus particulièrement celui présent dans le NiO, une migration de l'oxygène sous forme anionique (O²⁻) à travers l'électrolyte (symbolisée par des flèches), et une génération d'oxygène gazeux au niveau de l'anode.

L'oxyde de nickel NiO de la cathode est alors réduit en Ni, ceci sans mise en oeuvre d'un gaz réducteur qui serait préjudiciable à l'anode. En outre, du fait de la génération d'oxygène gazeux à l'anode, une pression partielle d'oxygène est maintenue élevée au niveau de l'anode ce qui permet de préserver son intégrité.

C'est la pression partielle d'O₂ dans le compartiment cathodique qui détermine l'équilibre Ni/NiO, et cet équilibre est fonction de la température. Dans le tableau ci-dessous sont regroupées les valeurs de différence de potentiel ΔU à appliquer aux bornes de chaque cellule élémentaire en fonction de la température de fonctionnement de l'électrolyseur et de la pression partielle d'O₂.

**Variation de la pression partielle d'oxygène en fonction de la température et de différence de potentiel ΔU à appliquer**

| **T°C** | **PO₂ (atm)** | **ΔU (V)** |
|---|---|---|
| 650 | 1,60929E-18 | 0,78 |
| 700 | 4,22526E-17 | 0,75 |
| 750 | 8,06013E-16 | 0,73 |
| 800 | 1,16814E-14 | 0,70 |
| 850 | 1,33428E-13 | 0,67 |
| 900 | 1,2383E-12 | 0,65 |
| 950 | 9,57832E-12 | 0,62 |

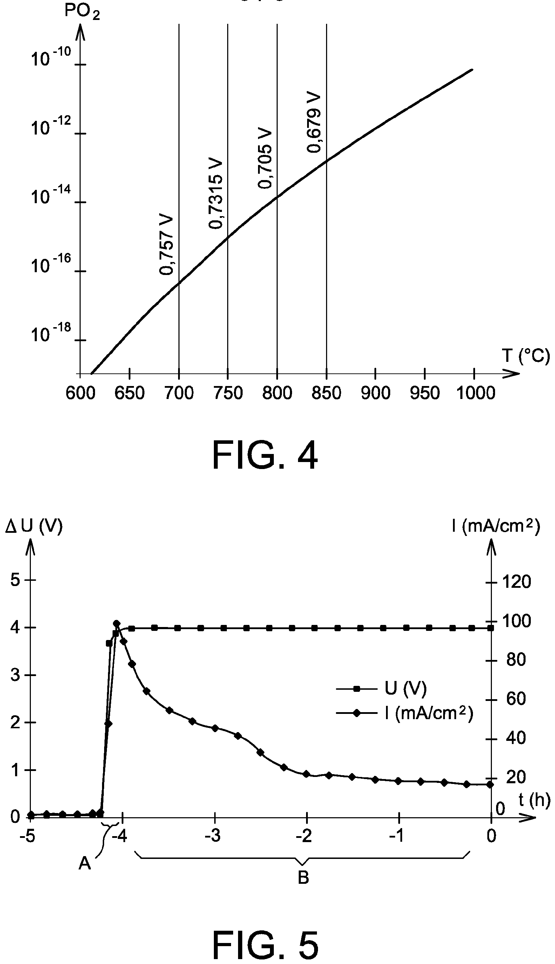

Sur la figure 4, on peut voir l'évolution de la pression partielle d'oxygène à l'équilibre Ni/NiO en fonction de la température tracée à partir des données du tableau ci-dessus.

Dans le cas d'un électrolyte en YSZ, la différence de potentiel est inférieure à 1,8 V pour éviter de dégrader l'électrolyte.

Dans un premier mode de réalisation, lors de l'étape b) les cellules élémentaires sont alimentées en gaz neutre, par exemple de l'azote. La présence de ce gaz neutre a pour effet d'éviter une réoxydation du Nickel. Le flux de gaz neutre permet également de drainer l'oxygène produit à l'anode.

Dans un deuxième mode de réalisation, lors de l'étape b), on alimente les compartiments anodiques et cathodiques directement avec de la vapeur d'eau.

Nous allons décrire le déroulement du procédé de fonctionnement selon ce deuxième mode de réalisation.

Lors d'une première phase et de manière similaire au mode de réalisation préalablement décrit, l'oxyde de nickel se réduit en nickel par pompage de l'oxygène à travers l'électrolyte.

Lors d'une deuxième phase, l'oxyde de nickel continue à se réduire en nickel, simultanément les premiers sites de NiO réduits en Ni sont le lieu de la réduction de l'eau selon la réaction (I), et produisent de l'hydrogène. Or cet hydrogène est un gaz réducteur, il participe donc à la réduction du NiO restant.

Dans ce mode de réalisation, le NiO est réduit à la fois par le pompage de l'oxygène à travers l'électrolyte et par l'hydrogène générée in situ. Dans ce mode de réalisation également, l'oxygène produit à l'anode maintient une pression partielle d'oxygène élevée à l'anode.

Ce mode de réalisation présente l'avantage de ne pas nécessiter d'alimentation en gaz neutre et de commutation dans les circuits d'alimentation, le circuit d'alimentation en eau de l'électrolyseur est utilisé directement.

De plus l'étape b) est plus rapide que dans le premier mode de réalisation puisque, simultanément au pompage de l'oxygène, le NiO est réduit par l'hydrogène produit. Ou alternativement, ce mode de réalisation permet de réaliser cette étape b) aussi rapidement que le premier mode de réalisation mais avec une différence de potentiel plus faible.

Dans les deux modes de réalisation, la quantité de NiO réduit en Ni peut être suivie par la mesure du courant aux bornes des cellules élémentaires. Sur la figure 5, on peut voir l'évolution du courant en mA/cm² aux bornes de l'électrolyseur de trois cellules élémentaires en fonction du temps pour une tension appliqué à chaque cellule de 1,33 V et à une température de 800°C. La quantité de courant représente le flux d'oxygène à travers l'électrolyte donc la quantité de sites de NiO réduits en Ni lors d'une première phase A, qui est presque instantanée, la quantité de courant augmente, une grande quantité de sites de NiO est réduite en Ni. Au-delà d'un extremum, commence une phase B lors de laquelle le courant aux bornes des cellules élémentaires diminue. Lorsque le courant est quasiment nul, presque tout le NiO a été réduit en Ni. On peut déterminer par intégration de la courbe du courant en fonction du temps, la quantité d'oxygène extraite des cermets, donc la quantité de NiO réduit en Ni. Par comparaison à la masse de NiO initiale, on en déduit le pourcentage de NiO qui a été réduit en Ni. A partir du graphique de la figure 5, on peut estimer qu'après 2 h, au moins 50% de la masse de NiO initiale a été réduite en Ni.

On peut prévoir de piloter l'étape b) en courant, i.e. on peut imposer le flux d'oxygène à travers l'électrolyte.

Plus la différence de potentiel appliquée aux bornes de l'électrolyseur est grande plus la réduction du NiO en Ni sera rapide.

Cette différence de potentiel est par exemple comprise entre 0,7 V et 1,3 V. Il est donc possible d'ajuster la vitesse de réduction en commandant la différence de potentiel imposée aux bornes de l'électrolyseur. Néanmoins la différence de potentiels appliquée lors de l'étape b) est choisie de préférence faible, de manière préférée comprise entre 0,7 V et 0,9 V afin de réaliser une réduction homogène, i.e. une réduction du NiO en Ni sur l'ensemble de la surface de l'électrode, même si elle est plus lente.

A 800°C, la tension de réduction du NiO en Ni peut se faire à partir de 705 mV et l'électrolyse de l'eau peut avoir lieu sous une tension de 839 mV pour un mélange H₂O/H₂=90/10 entrant.

Le deuxième mode de réalisation permet une automatisation simplifiée du fonctionnement de l'électrolyseur. En effet, une unité de commande détermine à partir de la mesure du courant aux bornes de l'électrolyseur, lorsque le courant est inférieur à valeur maximale prédéterminée, que l'électrolyse de l'eau peut commencer. Elle commande alors une augmentation de débit de la vapeur d'eau et une élévation de la différence de potentiel. Aucune commutation de vanne pour changer l'alimentation de l'électrolyseur n'est requise.

Lorsque l'on considère que les cathodes sont en état de fonctionner, i.e. qu'elles comportent suffisamment de Ni :
- dans le premier mode de réalisation, on interrompt l'alimentation en gaz neutre, on alimente l'électrolyseur en vapeur d'eau et on augmente la différence de potentiel à une valeur comprise typiquement entre 1 V et 1,3 V qui correspond aux valeurs de différence de potentiel pour effectuer l'électrolyse de l'eau,
- dans le deuxième mode de réalisation, on augmente le débit de vapeur d'eau et on augmente la différence de potentiel à une valeur comprise typiquement entre 1 V et 1,3 V.

La tension minimale d'électrolyse de l'eau est fonction du mélange entrant et de la température de fonctionnement. A titre d'exemple, pour un mélange H₂O/H₂=90/10 entrant, les tensions minimales U à imposer en fonction de la température T sont :

| T (°C) | U (V) |
|---|---|
| 650 | 0.902 |
| 700 | 0.881 |
| 800 | 0.839 |
| 850 | 0.819 |
| 900 | 0.798 |
| 950 | 0.777 |

La tension minimale à imposer pour l'électrolyse de l'eau est supérieure à la tension minimale à imposer pour la réduction du NiO en Ni.

De préférence, les étapes a) et b) ont lieu avantageusement à chaque mise en route de l'électrolyseur haute température.

Le procédé de fonctionnement selon l'invention est particulièrement avantageux pour un électrolyseur haute température ayant une entrée d'alimentation unique des compartiments anodiques et cathodiques. Cependant un tel procédé peut également être appliqué à un électrolyseur haute température ayant des alimentations séparées des compartiments anodiques et cathodiques. Par exemple, le procédé comporterait alors les étapes d'alimentation des compartiments cathodiques en vapeur d'eau et les compartiments anodiques en gaz neutre et d'application d'une différence de potentiel aux bornes de cellules élémentaires d'au moins 0,62V pour une température de fonctionnement comprise entre 650°C et 950°C. Une fois la température de fonctionnement atteinte, l'électrolyseur peut alors être directement alimenté en vapeur d'eau sans requérir une étape de réduction sous H2.

## Revendications

1. Procédé de fonctionnement d'une installation de production d'hydrogène comprenant au moins un électrolyseur haute température, ledit électrolyseur comportant une pluralité de cellules élémentaires (C1, C2), chacune des cellules élémentaires comportant une cathode (2.1) et une anode (4.1) séparées par un électrolyte (6.1), les cellules élémentaires (C1, C2) étant séparées par une plaque d'interconnexion (8), chaque plaque d'interconnexion (8) définissant avec une cathode (2.1) adjacente un compartiment cathodique (11) et avec une anode (2.1) adjacente un compartiment anodique (9), les cathodes (2.1) étant réalisées à partir d'un cermet contenant du nickel, ledit procédé comportant les étapes :
a) élévation de la température des cellules (C1, C2) jusqu'à une température de fonctionnement de l'électrolyseur comprise entre 650°C et 950°C,
b) application d'une différence de potentiel aux bornes de chacune des cellules élémentaires (C1, C2) égale à au moins 0,62 V, ayant pour effet de réduire l'oxyde de nickel,
b') alimentation des compartiments cathodiques (11) et des compartiments anodiques en gaz neutre, par exemple en azote, ou en vapeur d'eau,
c) alimentation en vapeur d'eau des compartiments cathodiques (11) et des compartiments anodiques,
d) application d'une différence de potentiel aux bornes des cellules élémentaires (C1, C2) apte à provoquer l'électrolyse de l'eau et supérieure à celle appliquée lors de l'étape b),
e) collecte de l'hydrogène produit aux cathodes (2.1) et de l'oxygène produit aux anodes (4.1),
les étapes c) et d) ayant lieu après les étapes b) et b').

2. Procédé de fonctionnement selon la revendication 1, dans lequel lors de l'étape a) la température est élevée jusqu'à une température comprise entre 700°C et 900°C, et, lors de l'étape b), la différence de potentiel aux bornes de chacune des cellules élémentaires (C1, C2) est égale à au moins 0,65 V.

3. Procédé de fonctionnement selon la revendication 1 ou 2, dans lequel la différence de potentiel appliquée lors de l'étape b) est inférieure à 0,9V.

4. Procédé de fonctionnement selon l'une des revendications 1 à 3, dans lequel les étapes c) et d) débutent simultanément.

5. Procédé de fonctionnement selon l'une des revendications 1 à 4, dans lequel lors de l'étape c) le débit de vapeur d'eau est augmenté par rapport à celui de l'étape b).

6. Procédé de fonctionnement selon l'une des revendications 1 à 5, dans lequel lors de l'étape b), un courant aux bornes des cellules élémentaires (C1, C2) est mesuré.

7. Procédé de fonctionnement selon la revendication 6, dans lequel l'étape c) débute lorsque le courant mesuré aux bornes des cellules élémentaires (C1, C2) est inférieur à une valeur seuil prédéterminée.

8. Installation de production d'hydrogène comportant au moins un électrolyseur haute température, ledit électrolyseur comportant :
- une pluralité de cellules élémentaires (C1, C2), chacune des cellules élémentaires comportant une cathode (2.1) et une anode (4.1) séparées par un électrolyte (6.1), les cellules élémentaires (C1, C2) étant séparées par une plaque d'interconnexion (8), chaque plaque d'interconnexion (8) définissant avec une cathode (2.1) adjacente un compartiment cathodique (11) et avec une anode (2.1) adjacente un compartiment anodique (9), les cathodes (2.1) étant réalisées à partir d'un cermet contenant du nickel,
- une entrée d'alimentation des compartiments anodiques (9) et une entrée d'alimentation des compartiments cathodiques (11),
- une alimentation en vapeur d'eau (12) d'au moins les compartiments cathodiques connectée à l'entrée d'alimentation des compartiments cathodiques,
- une source de gaz neutre connectée aux entrées d'alimentation,
- des moyens de collecte (20, 22) de l'hydrogène produit aux cathodes et de l'oxygène produit aux anodes,
- une source de tension (16),
- une unité de commande (UC) configurée pour contrôler l'installation de sorte que, lors d'une première phase de fonctionnement, la température des cellules atteigne une température de fonctionnement comprise entre 650°C et 950°C et qu'une différence de potentiel aux bornes des cellules élémentaires au moins égale à 0,62 V soit appliquées, et l'unité de commande (UC) étant configurée pour commander l'alimentation en gaz neutre des compartiments cathodiques et anodiques au moins lors de la première phase de fonctionnement, et de sorte que, lors d'une deuxième phase de fonctionnement, une différence de potentiels aux bornes des cellules élémentaires apte à provoquer l'électrolyse de l'eau et supérieure à celle appliquée lors de la première phase de fonctionnement soit appliquée et les compartiments anodiques et cathodiques soient alimentés en vapeur d'eau,
des moyens de mesure du courant (18) aux bornes des cellules élémentaires, l'unité de commande (UC) étant configurée pour commander, en fonction de la valeur de courant mesurée, l'alimentation en eau des compartiments cathodiques et la tension aux bornes des cellules élémentaires de sorte que la deuxième phase de fonctionnement d'électrolyse de l'eau commence lorsque la valeur du courant mesuré est inférieure à une valeur seuil donnée correspondant à une quantité d'oxyde de nickel aux cathodes inférieure à une quantité prédéterminée.

9. Installation de production d'hydrogène comportant au moins un électrolyseur haute température, ledit électrolyseur comportant :
- une pluralité de cellules élémentaires (C1, C2), chacune des cellules élémentaires comportant une cathode (2.1) et une anode (4.1) séparées par un électrolyte (6.1), les cellules élémentaires (C1, C2) étant séparées par une plaque d'interconnexion (8), chaque plaque d'interconnexion (8) définissant avec une cathode (2.1) adjacente un compartiment cathodique (11) et avec une anode (2.1) adjacente un compartiment anodique (9), les cathodes (2.1) étant réalisées à partir d'un cermet contenant du nickel,
une entrée d'alimentation des compartiments anodiques (9) et une entrée d'alimentation des compartiments cathodiques (11),
- une alimentation en vapeur d'eau (12) d'au moins les compartiments cathdiques connectée à l'entrée d'alimentation des compartiments cathodiques,
- des moyens de collecte (20, 22) de l'hydrogène produit aux cathodes et de l'oxygène produit aux anodes,
- une source de tension (16),
- une unité de commande (UC) configurée pour contrôler l'installation de sorte que, lors d'une première phase de fonctionnement, la température des cellules atteigne une température de fonctionnement comprise entre 650°C et 950°C et qu'une différence de potentiel aux bornes des cellules élémentaires au moins égale à 0,62 V soit appliquées, et l'unité de commande (UC) étant configurée pour commander l'alimentation en vapeur d'eau des compartiments cathodiques et anodiques au moins lors de la première phase de fonctionnement, et de sorte que, lors d'une deuxième phase de fonctionnement, une différence de potentiels aux bornes des cellules élémentaires apte à provoquer l'électrolyse de l'eau et supérieure à celle appliquée lors de la première phase de fonctionnement soit appliquée,
- des moyens de mesure du courant (18) aux bornes des cellules élémentaires, l'unité de commande (UC) étant configurée pour commander, en fonction de la valeur de courant mesurée, la tension aux bornes des cellules élémentaires de sorte que la deuxième phase de fonctionnement d'électrolyse de l'eau commence lorsque la valeur du courant mesuré est inférieure à une valeur seuil donnée correspondant à une quantité d'oxyde de nickel aux cathodes inférieure à une quantité prédéterminée.

10. Installation de production d'hydrogène selon la revendication 8 ou 9, dans laquelle la différence de potentiel appliquée lors de la première phase de fonctionnement est inférieure à 0,9V.

11. Installation de production d'hydrogène selon la revendication 8 ou 9, dans laquelle l'entrée d'alimentation des compartiments anodiques et l'entrée d'alimentation des compartiments cathodiques sont confondues et forment une entrée d'alimentation unique.

12. Installation selon l'une des revendications 8 à 11, dans laquelle les cathodes sont en cermet Ni-zircone yttriée.

## Patentansprüche

1. Verfahren zum Betreiben einer Wasserstofferzeugungsanlage, die mindestens eine Hochtemperatur-Elektrolysevorrichtung umfasst, wobei die Elektrolysevorrichtung eine Vielzahl von Elementarzellen (C1, C2) umfasst, wobei jede der Elementarzellen eine Kathode (2.1) und eine Anode (4.1) umfasst, die durch einen Elektrolyten (6.1) getrennt sind, wobei die Elementarzellen (C1, C2) durch eine Verbindungsplatte (8) getrennt sind, wobei jede Verbindungsplatte (8) mit einer benachbarten Kathode (2.1) einen Kathodenraum (11) und mit einer benachbarten Anode (2.1) einen Anodenraum (9) definiert, wobei die Kathoden (2.1) ausgehend von einem nickelhaltigen Cermet hergestellt sind, wobei das Verfahren die Schritte umfasst:
a) Erhöhen der Temperatur der Zellen (C1, C2) auf eine Betriebstemperatur der Elektrolysevorrichtung zwischen 650 °C und 950 °C,
b) Anlegen einer Potentialdifferenz an den Anschlüssen jeder der Elementarzellen (C1, C2) von mindestens gleich 0,62 V, bewirkend ein Reduzieren von Nickeloxid,
b') Zuführen von neutralem Gas, zum Beispiel Stickstoff, oder Wasserdampf zu den Kathodenräumen (11) und den Anodenräumen,
c) Zuführen von Wasserdampf zu den Kathodenräumen (11) und den Anodenräumen,
d) Anlegen einer Potentialdifferenz an den Anschlüssen der Elementarzellen (C1, C2), geeignet um die Elektrolyse des Wassers zu bewirken und höher als die, die während des Schritts b) angelegt wird,
e) Sammeln des an den Kathoden (2.1) erzeugten Wasserstoffs und des an den Anoden (4.1) erzeugten Sauerstoffs,
wobei die Schritte c) und d) nach den Schritten b) und b') erfolgen.

2. Verfahren zum Betreiben nach Anspruch 1, wobei während Schritt a) die Temperatur auf eine Temperatur zwischen 700 °C und 900 °C angehoben wird und während Schritt b) die Potentialdifferenz an den Anschlüssen jeder der Elementarzellen (C1, C2) mindestens gleich 0,65 V beträgt.

3. Verfahren zum Betreiben nach Anspruch 1 oder 2, wobei die während Schritt b) angelegte Potentialdifferenz weniger als 0,9 V beträgt.

4. Verfahren zum Betreiben nach einem der Ansprüche 1 bis 3, wobei die Schritte c) und d) gleichzeitig beginnen.

5. Verfahren zum Betreiben nach einem der Ansprüche 1 bis 4, wobei während Schritt c) der Wasserdampfdurchsatz im Vergleich zu dem von Schritt b) erhöht ist.

6. Verfahren zum Betreiben nach einem der Ansprüche 1 bis 5, wobei während Schritt b) ein Strom an den Anschlüssen der Elementarzellen (C1, C2) gemessen wird.

7. Verfahren zum Betreiben nach Anspruch 6, wobei Schritt c) beginnt, wenn der an den Anschlüssen der Elementarzellen (C1, C2) gemessene Strom unter einem gegebenen Schwellenwert liegt.

8. Wasserstofferzeugungsanlage, umfassend mindestens eine Hochtemperatur-Elektrolysevorrichtung, wobei die Elektrolysevorrichtung umfasst:
- eine Vielzahl von Elementarzellen (C1, C2), wobei jede der Elementarzellen eine Kathode (2.1) und eine Anode (4.1) umfasst, getrennt durch einen Elektrolyten (6.1), wobei die Elementarzellen (C1, C2) durch eine Verbindungsplatte (8) getrennt sind, wobei jede Verbindungsplatte (8) mit einer benachbarten Kathode (2.1) einen Kathodenraum (11) und mit einer benachbarten Anode (2.1) einen Anodenraum (9) definiert, wobei die Kathoden (2.1) ausgehend von einem nickelhaltigen Cermet hergestellt sind,
- einen Zufuhreingang der Anodenräume (9) und einen Zufuhreingang der Kathodenräume (11),
- eine Wasserdampfzufuhr (12) mindestens der Kathodenräume, verbunden mit dem Zufuhreingang der Kathodenräume,
- eine Quelle von neutralem Gas, verbunden mit den Zufuhreingängen,
- Mittel (20, 22) zum Sammeln von an den Kathoden erzeugtem Wasserstoff und an den Anoden erzeugtem Sauerstoff,
- eine Spannungsquelle (16),
- eine Steuer-/Regeleinheit (UC), eingerichtet um die Anlage so zu steuern/regeln, dass während einer ersten Betriebsphase die Temperatur der Zellen eine Betriebstemperatur zwischen 650 °C und 950 °C erreicht und dass eine Potentialdifferenz an den Anschlüssen der Elementarzellen von mindestens gleich 0,62 V angelegt wird, und wobei die Steuer-/Regeleinheit (UC) eingerichtet ist, um die Zufuhr von neutralem Gas zu den Kathoden- und Anodenräumen mindestens während der ersten Betriebsphase zu steuern/regeln, und derart, dass während einer zweiten Betriebsphase eine Potentialdifferenz an den Anschlüssen der Elementarzellen angelegt wird, die dazu geeignet ist eine Elektrolyse des Wassers zu bewirken, und höher ist als diejenige, die während der ersten Betriebsphase angelegt wird, und wobei zu den Anoden- und Kathodenräumen Wasserdampf zugeführt wird,
Strommessmittel (18) an den Anschlüssen der Elementarzellen, wobei die Steuer-/Regeleinheit (UC) eingerichtet ist, in Abhängigkeit vom gemessenen Stromwert, die Wasserzufuhr zu den Kathodenräumen und die Spannung an den Anschlüssen der Elementarzellen so zu steuern/regeln, dass die zweite Betriebsphase der Wasserelektrolyse beginnt, wenn der gemessene Stromwert unter einem gegebenen Schwellenwert liegt, der einer Menge an Nickeloxid an den Kathoden entspricht, die unter einer vorbestimmten Menge liegt.

9. Wasserstofferzeugungsanlage, umfassend mindestens eine Hochtemperatur-Elektrolysevorrichtung, wobei die Elektrolysevorrichtung umfasst:
- eine Vielzahl von Elementarzellen (C1, C2), wobei jede der Elementarzellen eine Kathode (2.1) und eine Anode (4.1) umfasst, die durch einen Elektrolyten (6.1) getrennt sind, wobei die Elementarzellen (C1, C2) durch eine Verbindungsplatte (8) getrennt sind, wobei jede Verbindungsplatte (8) mit einer benachbarten Kathode (2.1) einen Kathodenraum (11) und mit einer benachbarten Anode (2.1) einen Anodenraum (9) definiert, wobei die Kathoden (2.1) ausgehend von einem nickelhaltigen Cermet hergestellt sind,
- einen Zufuhreingang der Anodenräume (9) und einen Zufuhreingang der Kathodenräume (11),
- eine Wasserdampfzufuhr (12) mindestens der Kathodenräume, verbunden mit dem Zufuhreingang der Kathodenräume,
- Mittel (20, 22) zum Sammeln von an den Kathoden erzeugtem Wasserstoff und an den Anoden erzeugtem Sauerstoff,
- eine Spannungsquelle (16),
- eine Steuer-/Regeleinheit (UC), eingerichtet um die Anlage so zu steuern/regeln, dass während einer ersten Betriebsphase die Temperatur der Zellen eine Betriebstemperatur zwischen 650 °C und 950 °C erreicht und dass eine Potentialdifferenz an den Anschlüssen der Elementarzellen von mindestens gleich 0,62 V angelegt wird, und wobei die Steuer-/Regeleinheit (UC) eingerichtet ist, um die Zufuhr von Wasserdampf zu den Kathoden- und Anodenräumen mindestens während der ersten Betriebsphase zu steuern/regeln,
und derart, dass während einer zweiten Betriebsphase eine Potentialdifferenz an den Anschlüssen der Elementarzellen angelegt wird, die dazu geeignet ist eine Elektrolyse des Wassers zu bewirken und höher ist als diejenige, die während der ersten Betriebsphase angelegt wird,
- Strommessmittel (18) an den Anschlüssen der Elementarzellen, wobei die Steuer-/Regeleinheit (UC) eingerichtet ist, um die Spannung an den Anschlüssen der Elementarzellen in Abhängigkeit vom gemessenen Stromwert so zu steuern/regeln, dass die zweite Betriebsphase der Wasserelektrolyse beginnt, wenn der gemessene Stromwert unter einem gegebenen Schwellenwert liegt, der einer Menge an Nickeloxid an den Kathoden entspricht, die niedriger als eine vorbestimmte Menge ist.

10. Wasserstofferzeugungsanlage nach Anspruch 8 oder 9, wobei die während der ersten Betriebsphase angelegte Potentialdifferenz weniger als 0,9 V beträgt.

11. Wasserstofferzeugungsanlage nach Anspruch 8 oder 9, wobei der Zufuhreingang der Anodenräume und der Zufuhreingang der Kathodenräume zusammengenommen sind und einen einzigen Zufuhreingang bilden.

12. Anlage nach einem der Ansprüche 8 bis 11, wobei die Kathoden aus yttriertem Ni-Zirkonoxid Cermet sind.

## Claims

1. A method for operating an installation for producing hydrogen comprising at least one high temperature electrolyzer, said electrolyzer including a plurality of elementary cells (C1, C2), each of the elementary cells including a cathode (2.1) and an anode (4.1) separated by an electrolyte (6.1), the elementary cells (C1, C2) being separated by an interconnection plate (8), each interconnection plate (8) defining with an adjacent cathode (2.1) a cathode compartment (11) and with an adjacent anode (2.1) an anode compartment (9), the cathodes (2.1) being made from a cermet containing nickel, said method including the steps:
a) raising the temperature of the cells (C1, C2) to an operating temperature of the electrolyzer comprised between 650°C and 950°C,
b) applying a potential difference to the terminals of each of the elementary cells (C1, C2) equal to at least 0.62 V, which reduces nickel oxide,
b') supplying the cathode compartments (11) and the anode compartments with neutral gas, for example with nitrogen or steam,
c) supplying the cathode compartments (11) and the anode compartments with steam,
d) applying a potential difference to the terminals of the elementary cells (C1, C2) capable of causing electrolysis of water and higher than the potential difference applied at step b),
e) collecting the hydrogen produced at the cathodes (2.1) and the oxygen produced at the anodes (4.1),
steps c) and d) taken place after steps b) and b').

2. The operating method according to claim 1, wherein during step a) the temperature is raised up to a temperature comprised between 700°C and 900°C, and, during step b), the potential difference on the terminals of each of the elementary cells (C1, C2) is equal to at least 0.65 V.

3. The operating method according to claim 1 or 2, wherein the potential difference applied during step b) is less than 0.9V.

4. The operating method according to one of claims 1 to 3, wherein steps c) and d) begin simultaneously.

5. The operating method according to one of claims 1 to 4, wherein, during step c), the steam flow rate is increased relatively to that of step b).

6. The operating method according to one of claims 1 to 5, wherein during step b), a current on the terminals of the elementary cells (C1, C2) is measured.

7. The operating method according to claim 6, wherein step c) begins when the current measured on the terminals of the elementary cells (C1, C2) is less than a predetermined threshold value.

8. An installation for producing hydrogen including at least one high temperature electrolyzer, said electrolyzer including:
- a plurality of elementary cells (C1, C2), each of the elementary cells including a cathode (2.1) and an anode (4.1) separated by an electrolyte (6.1), the elementary cells (C1, C2) being separated by an interconnection plate (8), each interconnection plate (8) defining with an adjacent cathode (2.1) a cathode compartment (11) and with an adjacent anode (2.1) an anode compartment (9), the cathodes (2.1) being made from a cermet containing nickel,
- a supply inlet for the anode compartments (9) and a supply inlet for the cathode compartments (11),
- a steam supply (12) for at least the cathode compartments connected to the supply inlet for the cathode compartments,
- a neutral gas source connected to the supply inlets,
- means (20, 22) for collecting the hydrogen produced at the cathodes and the oxygen produced at the anodes,
- a voltage source (16),
- a control unit (UC) configured to control the installation so that, during a first operating phase, the temperature of the cells attains an operating temperature comprised between 650°C and 950°C and a potential difference on the terminals of the elementary cells at least equal to 0.62 V is applied, and the control unit (UC) being configured to control the neutral gas supply for the cathode and anode compartments at least during the first operating phase, and so that, during a second operating phase, a potential difference capable of causing electrolysis of water and higher than the potential difference applied during the first operating phase is applied to the terminals of the elementary cells and the anode and cathode compartments are supplied with steam,
- means for measuring current (18) at the terminals of the elementary cells, the control unit (UC) being configured to control, as a function of the measured current value, the supply of water to the cathode compartments and the voltage at the terminals of the elementary cells, such that the second operating phase for the water electrolysis begins when the current value measured is lower than a give threshold corresponding to the amount of nickel oxide at the cathodes, lower than a predetermined amount.

9. An installation for producing hydrogen including at least one high temperature electrolyzer, said electrolyzer including:
- a plurality of elementary cells (C1, C2), each of the elementary cells including a cathode (2.1) and an anode (4.1) separated by an electrolyte (6.1), the elementary cells (C1, C2) being separated by an interconnection plate (8), each interconnection plate (8) defining with an adjacent cathode (2.1) a cathode compartment (11) and with an adjacent anode (2.1) an anode compartment (9), the cathodes (2.1) being made from a cermet containing nickel,
- a supply inlet for the anode compartments (9) and a supply inlet for the cathode compartments (11),
- a steam supply (12) for at least the cathode compartments connected to the supply inlet for the cathode compartments,
- means (20, 22) for collecting the hydrogen produced at the cathodes and the oxygen produced at the anodes,
- a voltage source (16),
- a control unit (UC) configured to control the installation so that, during a first operating phase, the temperature of the cells attains an operating temperature comprised between 650°C and 950°C and that a potential difference on the terminals of the elementary cells at least equal to 0.62 V is applied, and the control unit (UC) being configured to control the steam supply for the cathode and anode compartments at least during the first operating phase, and so that, during a second operating phase, a potential difference to the terminals of the elementary cells capable of causing electrolysis of water and higher than the potential difference applied during the first operating phase,
- means for measuring current (18) at the terminals of the elementary cells, the control unit (UC) being configured to control, as a function of the measured current value, the supply of water to the cathode compartments and the voltage at the terminals of the elementary cells, such that the second operating phase for the water electrolysis begins when the current value measured is lower than a give threshold corresponding to the amount of nickel oxide at the cathodes, lower than a predetermined amount.

10. The installation for producing hydrogen according to claim 8 or 9, wherein the potential difference applied during the first operating phase is less than 0.9V.

11. The installation for producing hydrogen according to claim 8 or 9, wherein the supply inlet for the anode compartments and the supply inlet for the cathode compartments are the same and form a single supply inlet.

12. The installation according to one of claims 8 to 11, wherein the cathodes are in Ni-yttriated zirconia cermet.
